# EUROPEAN PATENT APPLICATION

(11) **EP 1 255 156 A2**
(43) Date of publication of application: **06.11.2002**
(21) Application number: 02002886.6
(22) Date of filing: 08.02.2002
(51) Int. Cl.: G02F 1/21, G02F 1/13, G02F 1/03, G02F 1/05, G02F 1/07

(54) **Tunable optical filter**

(30) Priority: 30.04.2001 US 846476
(71) Applicant: Agilent Technologies, Inc., Palo Alto, CA 94306 (US)
(72) Inventor: Nishimura, Ken A., Freemont, CA. 94555 (US); Hardcastle, Ian, Sunnyvale, CA. 94087 (US)
(74) Representative: Liesegang, Eva

(57) **Abstract**

The tunable optical filter comprises a Fabry-Perot cavity (12) and a controlled-index device (20). The controlled-index device is located in the Fabry-Perot cavity and has a refractive index responsive to a control signal (22). The Fabry-Perot cavity has at least one resonant optical frequency that depends on the refractive index of the controlled-index device. The Fabry-Perot cavity has a maximum transmissivity for light having a frequency equal to its resonant optical frequency, and attenuates light whose frequency differs from the resonant optical frequency. Thus, the control signal controls the frequency of the light transmitted by the tunable optical filter.

## Description

### Background of the Invention

In optical devices used in optical communications systems having multifrequency optical signals and in other optical systems, there is often the need to separate an optical signal having one optical frequency from an optical signal having another frequency. Optical filters are commonly used for this purpose. However, high quality optical filters based on multi-layer dielectric films are expensive and time consuming to manufacture. Moreover, the need often exists to select the one of the optical signals that is separated from the others. This requires a tunable optical filter. Conventional tunable optical filters are complex, expensive to manufacture and difficult to tune.

Thus, what is needed is a tunable optical filter that is simple and low in cost to manufacture and that is easy to tune.

### Summary of the Invention

The invention provides a tunable optical filter that comprises a Fabry-Perot cavity and a controlled-index device. The controlled-index device is located in the Fabry-Perot cavity has a refractive index responsive to a control signal. The Fabry-Perot cavity has at least one resonant optical frequency that depends on the refractive index of the controlled-index device. The Fabry-Perot cavity has a maximum transmissivity for light having a frequency equal to its resonant optical frequency, and attenuates light whose frequency differs from the resonant optical frequency. Thus, the control signal controls the frequency of the light transmitted by the tunable optical filter.

The invention also provides a tunable optical filter that comprises a Fabry-Perot cavity, a controlled-index device and a controller. The Fabry-Perot cavity includes a pair of reflectors that are partially reflective. The controlled-index device is located in the Fabry-Perot cavity. The controller is coupled to the controlled-index device to control the refractive index of the controlled-index device.

### Brief Description of the Drawings

Figure 2 is a schematic drawing showing an embodiment of the tunable optical filter according to the invention in which the controlled-index device includes a liquid-crystal cell.
Figure 3 is a schematic drawing showing an embodiment of the tunable optical filter according to the invention in which the controlled-index device includes a first embodiment of a Pockels cell.
Figure 4A is a schematic drawing showing an embodiment of the tunable optical filter according to the invention in which the controlled-index device includes a second embodiment of a Pockels cell.
Figure 4B is a schematic drawing showing an embodiment of the tunable optical filter according to the invention in which the controlled-index device includes a second embodiment of a Pockels cell with bifurcated electrodes.
Figure 5 is a schematic drawing showing an embodiment of the tunable optical filter according to the invention in which the controlled-index device includes a Kerr cell.
Figure 6 is a schematic drawing showing an embodiment of a tunable optical filter according to the invention in which the controlled-index device includes a prism of photorefractive material controlled by an optical control signal.
Figure 7 is a schematic drawing showing a first polarization-independent embodiment of a tunable optical filter according to the invention.
Figure 8 is a schematic drawing showing a second polarization-independent embodiment of a tunable optical filter according to the invention.

### Detailed Description of the Invention

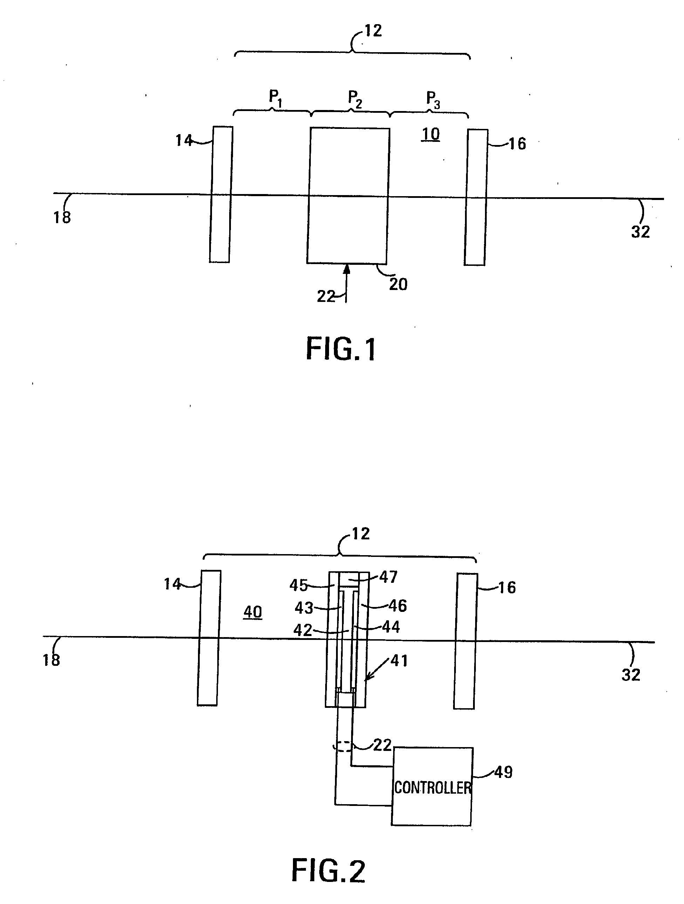

Figure 1 shows the tunable optical filter 10 according to the invention. The tunable optical filter is shown as filtering the optical input signal 18 to generate the optical output signal 32. The optical input signal is composed of a number of input frequency components having different frequencies. The frequencies of the input frequency components are within an input frequency range. The optical output signal is composed of one or more of the input frequency components. The input frequency components constituting the optical output signal have frequencies within an output frequency range. The output frequency range lies within, and is narrower than, the input frequency range. Typically, the optical output signal is composed of only one of the input frequency components.

In the context of this disclosure, the terms *optical* and *light* will be construed to refer to electromagnetic radiation in a frequency range extending from far infra-red to far ultra-violet.

The tunable optical filter 10 is composed of the Fabry-Perot cavity 12 in which is located the controlled-index device 20. The controlled-index device 20 is composed of a material that is transparent in the input frequency range and whose refractive index is controlled by the control signal 22.

The Fabry-Perot cavity is bounded by the reflectors 14 and 16. The reflectors are partially reflective in a frequency range that includes the input frequency range, and are disposed parallel to one another. In an embodiment, the reflectors 12 and 14 are each composed of a distributed Bragg reflector. The Fabry-Perot cavity may alternatively be bounded by other suitable reflectors, such as partially-silvered surfaces supported by suitable substrates.

The Fabry-Perot cavity 12 has at least one resonant optical frequency. The Fabry-Perot cavity has a maximum transmissivity for light having a frequency equal to its resonant frequency, and attenuates light whose frequency differs from the resonant frequency.

The Fabry-Perot cavity 12 has an optical path length that determines its resonant frequency. In the example shown, the optical path length of the Fabry-Perot cavity is the sum of the optical path lengths of the optical paths P₁, P₂ and P₃. The optical path P₁ extends from the reflector 14 to the controlled-index device 20; the optical path P₂ extends through the controlled-index device and the optical path P₃ extends from the controlled-index device to the reflector 16. The optical path length of each optical path is the product of the physical length of the optical path and the refractive index of the material of the optical path. The material of the optical paths P₁ and P₃ is typically a gas, such as air, or a vacuum. In an embodiment, the reflectors 14 and 16 may contact, or may be deposited on, the controlled-index device. In this case, the optical paths P₁ and P₃ each have an optical path length of zero, and the optical path length of the Fabry-Perot cavity is equal to that of P₂, the optical path that extends through the controlled-index device.

The optical path length of the controlled-index device 20 constitutes at least part of the optical path length of the Fabry-Perot cavity 12. The optical path length of the controlled-index device depends on the refractive index of the controlled-index device, which in turn depends on the control signal 22.
The control signal 22 controls the refractive index of the controlled-index device, and, hence, the optical path length and the resonant frequency of the Fabry-Perot cavity. Changing the refractive index of the controlled-index device selects the range of input frequency components of the optical input signal 18 that are transmitted as the optical output signal 32.

In a typical application, the optical input signal 18 is a wavelength-division multiplexed (WDM) optical signal and the tunable optical filter 10 selects one of the input frequency components as the optical output signal 32. In the WDM application, the input frequency components are separated by a standardized frequency difference. The resonance of the Fabry-Perot cavity 12 has a Q that determines the selectivity of the tunable optical filter. The selectivity can be defined as the signal-to-crosstalk ratio of the tunable optical filter, in which the signal level is the level of the frequency component selected by the tunable optical filter and the crosstalk level is the sum of the residual levels of the frequency components rejected by the tunable optical filter. One factor in determining the Q required to provide a given selectivity is the frequency spacing of the input frequency components. In other applications, the Fabry-Perot cavity may be configured to have a resonance with a relatively low Q to enable the tunable optical filter 10 to transmit an optical output signal composed of more than one of the input frequency components.

Figure 1 shows the reflectors 14 and 16 as stand-alone elements. However, this is not critical to the invention. The reflectors 14 and 16 may be supported by the controlled-index device 20. For example, the reflectors 14 and 16 may be deposited on the surfaces of the controlled-index device shown in Figure 1 as facing the reflectors 14 and 16, respectively.

Figure 2 shows an embodiment 40 of a tunable optical filter according to the invention. Elements of the tunable optical filter 40 that correspond to elements of the tunable optical filter 10 shown in Figure 1 are-indicated using the same reference numerals and will not be described again here. In the tunable optical filter 40, the liquid crystal cell 41 is used as the controlled-index device. The liquid crystal cell is composed of a layer of a liquid crystal material sandwiched between two transparent electrodes. Specifically, the liquid crystal cell is composed of the liquid crystal material 42 sandwiched between the electrodes 43 and 44. The electrodes 43 and 44 are supported by the transparent covers 45 and 46, respectively. The spacer 47 separates the transparent covers 45 and 46 from one another. The transparent covers and the spacer form a cell that contains the liquid crystal material.

In an embodiment, the transparent covers 45 and 46 were layers of glass, the electrodes 43 and 44 were layers of a transparent, conductive material deposited on the respective transparent covers and the liquid crystal material 42 was a nematic liquid crystal material. Indium-tin oxide was used as the transparent conductive material. Suitable alternatives to these materials are known in the art and additional suitable materials may become available in the future.

Also shown is the controller 49 that generates the electrical control signal 22. Conductors connect the control signal 22 generated by the controller to the electrodes 43 and 44. The control signal establishes a potential difference between the electrodes 43 and 44, which applies an electric field to the liquid crystal material 42. The electric field determines the effective refractive index of the liquid crystal material and, hence, the resonant frequency of the Fabry-Perot cavity 12 and the frequency of the input frequency component of the optical input signal 18 that is output as the optical output signal 32. When the liquid crystal material is a nematic liquid crystal material, the control signal 22 is an a.c. signal and the effective refractive index depends on the root mean square value of the electric field.

Figure 2 shows the reflectors 14 and 16 as stand-alone elements. However, this is not critical to the invention. The reflector 14 may be supported by the transparent cover 45 and the reflector 16 may be supported by the transparent cover 46. For example, the reflector 14 may be deposited on the surface of the transparent cover 45 remote from the surface that supports the electrode 43, and the reflector 16 may be deposited on the surface of the transparent cover 46 remote from the surface that supports the electrode 44.

As a further alternative, the reflectors 14 and 16 may be integral with the electrodes 43 and 44, respectively. In this case, the material of the electrodes is a conductive, semi-reflective material such as, but not limited to, aluminum, silver, gold, indium tin oxide or a doped semiconductor material. The electrodes may each be physically isolated from the liquid crystal material by a suitable buffer layer.

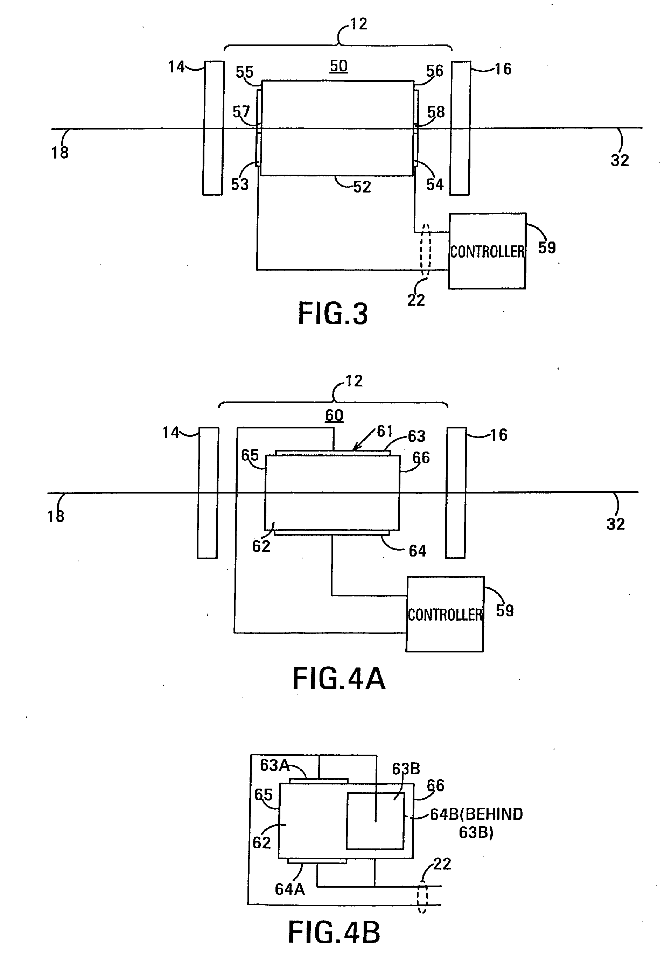

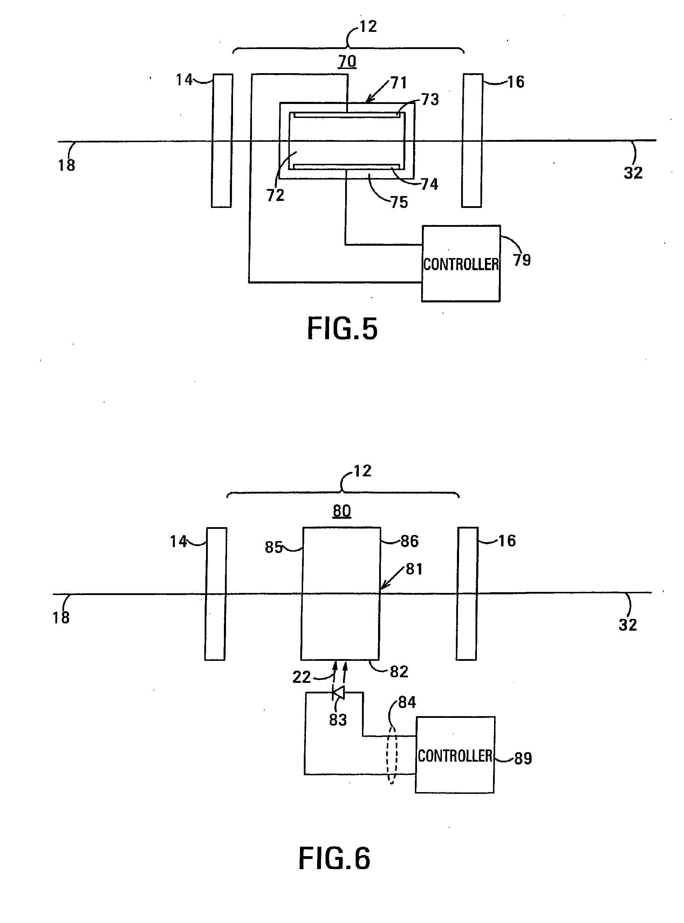

Figures 3, 4A and 5 shows embodiments 50, 60 and 70 of a tunable optical filter according to the invention in which the controlled-index device includes an electro-optical material. In the tunable optical filters 50 and 60 shown in Figures 3 and 4A respectively, the electro-optical material is a solid and forms part of a Pockels cell. In the tunable optical filter 70 shown in Figure 5, the electro-optical material is a liquid and forms part of a Kerr cell. Elements of the tunable optical filters 50, 60 and 70 that correspond to elements of the tunable optical filter 10 shown in Figure 1 are indicated using the same reference numerals and will not be described again here.

In the tunable optical filter 50 shown in Figure 3, the Pockels cell 51 constitutes the controlled-index device. The Pockels cell is composed of the prism 52 of electro-optical material. As used in this disclosure, the word *prism* denotes a transparent body that is bounded in part by two opposed plane surfaces 55 and 56. The prism is oriented with the plane surfaces 55 and 56 facing the reflectors 14 and 16, respectively. In the example shown, the electrodes 53 and 54 are located on the plane surfaces 55 and 56, respectively. An example in which the material of the electrodes 53 and 54 is opaque and the electrodes are formed to include the apertures 57 and 58, respectively, is shown. The electrodes may alternatively be of a transparent material such as ITO.

Solid electro-optical materials that may be used as the prism 52 include but are not limited to lithium niobate, lithium tantalate, potassium dihydrogen phosphate, potassium dideuterium phosphate, aluminum dihydrogen phosphate, aluminum dideuterium phosphate and barium sodium niobate. Suitable alternatives to these materials are known in the art and other suitable materials may become available in the future.

Also shown in the controller 59 that generates the electrical control signal 22. Conductors connect the control signal 22 generated by the controller to the electrodes 53 and 54. The potential difference between the electrodes 53 and 54 applies an electric field to the electro-optical material of the prism 52. The electric field determines the effective refractive index of the electro-optical material and, hence, the resonant frequency of the Fabry-Perot cavity 12 and the frequency of the frequency component of the optical input signal 18 that is output as the optical output signal 32.

Figure 3 shows the reflectors 14 and 16 as stand-alone elements. However, this is not critical to the invention. The reflectors 14 and 16 may be integral with the electrodes 53 and 54, respectively. In this case, the material of the electrodes is a conductive, semi-reflective material such as, but not limited to, aluminum, silver, gold, indium-tin oxide, or a doped semiconductor material. The electrodes would lack the apertures 57 and 58. Alternatively, the apertures 57 and 58 may be replaced by reflective regions having a lower reflectivity than the remainder of the electrodes.

In the tunable optical filter 60 shown in Figure 4A, the Pockels cell 61 differs from the Pockels cell 51 shown in Figure 3 in that the surfaces of the prism 62 of solid electro-optical material on which the electrodes 63 and 64 are located are orthogonal to the opposed, plane surfaces 65 and 66. In other words, the electrodes are disposed parallel to the direction in which the optical input signal 18 propagates through the prism. This arrangement increases the electric field strength generated in the prism 62 for a given voltage of the control signal 22.

Figure 4B shows an alternative embodiment of the Pockels cell 61 in which the electrodes 63 and 64 are bifurcated into respective electrode halves 63A, 63B and 64A, 64B and the electrode halves 63A and 64A are located on opposed surfaces of the prism 62 orthogonal to the opposed surfaces on which the electrode halves 63B and 64B are located. Bifurcating the electrodes makes the characteristics of the tunable optical filter 60 more tolerant of defects in the refractive index vs. electric field characteristics of the prism 62.

Figures 4A and 4B show the reflectors 14 and 16 as stand-alone elements. However, this is not critical to the invention. The reflectors 14 and 16 may be supported by the prism 62. For example, the reflectors 14 and 16 may be deposited on the opposed plane surfaces 65 and 66 of the prism.

Figure 5 shows an embodiment 70 of a tunable optical filter according to the invention in which a liquid electro-optical material constituting part of a Kerr cell is used as the controlled-index device. In the tunable optical filter 70, the Kerr cell 71 is composed of the cell 75 and the electrodes 73 and 74 located on opposed walls of the cell. The cell contains the liquid electro-optical material 72. In the example shown, the electrodes are disposed parallel to the direction in which the input optical signal 18 propagates through the cell. The electrodes may alternatively be located on the walls of the cell facing the reflectors 14 and 16. The electrodes 73 and 74 may alternatively be bifurcated in a manner similar to that shown in Figure 4B.

Liquid electro-optical materials that may constitute part of the Kerr cell 71 include, in order of increasing electro-optical effect, benzene, carbon disulfide, water, nitrotoluene and nitrobenzene. Suitable alternatives to these materials are known in the art, and additional suitable materials may become available in the future.

Also shown in the controller 79 that generates the electrical control signal 22. Conductors connect the control signal to the electrodes 73 and 74. The potential difference between the electrodes 73 and 74 applies an electric field to the liquid electro-optical material. The electric field determines the effective refractive index of the electro-optical material and, hence, the resonant frequency of the Fabry-Perot cavity 12 and the frequency of the frequency component of the optical input signal 18 that is output as the optical output signal 32.

Figure 5 shows the reflectors 14 and 16 as stand-alone elements. However, this is not critical to the invention. The reflectors 14 and 16 may be supported by the Kerr cell 71. For example, the reflectors 14 and 16 may be deposited on the walls of the cell 75 shown in Figure 5 as facing the reflectors 14 and 16, respectively. Moreover, the reflectors, located as just described, may additionally be integral with the electrodes 73 and 74.

Figure 6 shows an embodiment 80 of a tunable optical filter according to the invention in which the controlled-index device 81 is composed of the prism 82 of a photorefractive material. The tunable optical filter additionally includes the light source 83 and the controller 89.

The photorefractive material of the prism 82 has a refractive index that depends on the intensity of the optical control signal 22 that illuminates the prism. The optical control signal is generated by the light source 83 with an intensity that depends on the electrical control signal 84 generated by the controller 89. The light source and the prism 82 are located relative to one another for the light generated by the light source to illuminate-the prism as the control signal 22.

Photorefractive materials that may be used in the controlled-index device 81 include lithium niobate; barium titanate; cadmium sulfide selenide, e.g., a crystal of CdS_{0.8}Se_{0.2}:V; cadmium manganese telluride, e.g., a crystal of Cd_{0.55}Mn_{0.45}Te:V; composite polymers such as poly(N-vinylcarbazole) and polysiloxanes with pendant carbazole groups; and semiconductors such as gallium arsenide, aluminum gallium arsenide and indium phosphide. Suitable alternatives to these materials are known in the art. Additional, potentially-suitable materials may become known in the future.

The current fed to the light source 83 by the controller 89 determines the intensity of the light generated by the light source as the control signal 22. The intensity of the control signal 22 determines the refractive index of the photorefractive material of the prism 82, and, hence, the resonant frequency of the Fabry-Perot cavity 12 and the frequency of the frequency component of the optical input signal 18 that is output as the optical output signal 32.

Figure 6 shows the reflectors 14 and 16 as stand-alone elements. However, this is not critical to the invention. The reflectors 14 and 16 may be supported by the prism 82. For example, the reflectors 14 and 16 may be deposited on the opposed, plane surfaces 85 and 86 of the prism.

The liquid crystal, electro-optical and photorefractive materials that constitute part of the controlled-index device 20 in the embodiments of the tunable optical filter described above typically exhibit a birefringence that is dependent on the control signal 22. The controlled-index device can be said to have a non-isotropic axis defined by the non-isotropic axis of the liquid crystal, electro-optical or photorefractive materials that forms part of the controlled-index device. In the embodiments described above, the optical input signal should be linearly polarized. To maximize the change in optical path length as a function of the control signal, the controlled-index device is aligned so that its non-isotropic axis is aligned parallel to the direction of polarization of the input optical signal 18.

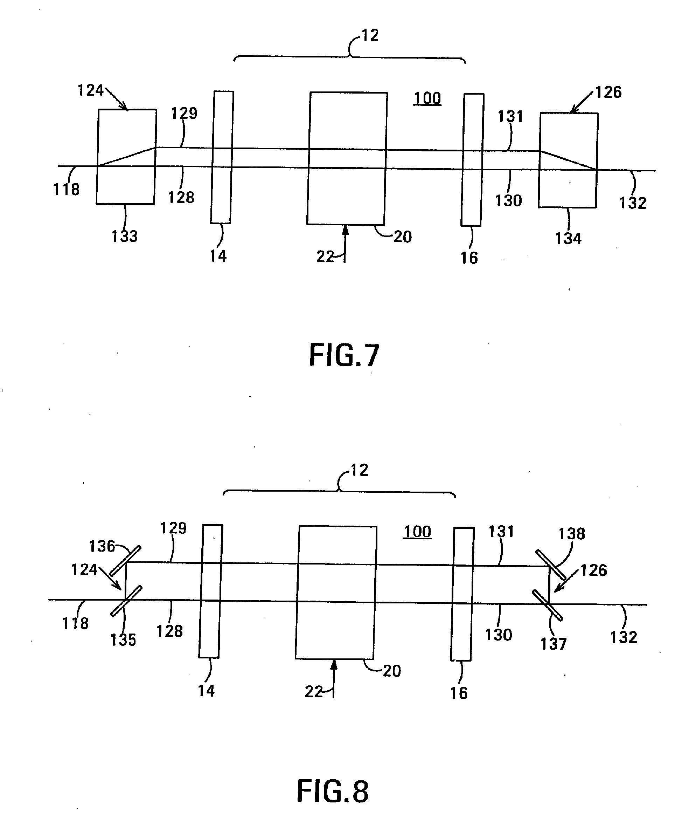

Figure 7 shows an embodiment 100 of an optical filter according to the invention in which the input optical signal does not have to be linearly polarized. Elements of the tunable optical filter 100 that correspond to elements of the tunable optical filter 10 shown in Figure 1 are indicated using the same reference numerals and will not be described again here.

The tunable optical filter 100 additionally includes the polarization-dispersive device 124 located upstream of the controlled-index device 20 and the polarization-dispersive device 126 located downstream of the controlled-index device. In this disclosure, the terms *upstream* and *downstream* relate to the direction of propagation of the input optical signal 118 through the tunable optical filter. The polarization-dispersive devices 124 and 126 have equal and opposite polarization dispersion characteristics. In the example shown, the Fabry-Perot cavity 12 is located between the polarization-dispersive devices.

The polarization-dispersive device 124 divides the input optical signal 118 into the input polarization components 128 and 129 and spatially separates the input polarization components from one another in a direction orthogonal to their direction of propagation. The input polarization components are linearly polarized and have orthogonal directions of polarization. Each of the input polarization components is composed of frequency components corresponding to the input frequency components constituting the optical input signal 118.

The controlled-index device 20 is oriented so that its isotropic axis is aligned at 45 degrees to the directions of polarization of the input polarization components 128 and 129. With this alignment of the isotropic axis, the change in the optical path length, and hence in the resonant frequency, of the Fabry-Perot cavity 12 caused by a change in the control signal 22 is the same for both input polarization components. Any of the above-described embodiments of the controlled-index device may be used as the controlled-index device 20.

Alternatively, the controlled-index device can be bifurcated into two controlled-index elements (not shown) having mutually-orthogonal isotropic axes. The controlled-index elements are positioned so that the input polarization component 128 passes through one of them and the input polarization component 129 passes through the other of them.

The Fabry-Perot cavity 12 operates as described above with reference to Figure 1 to transmit one or more of the frequency components of each of the input polarization components 128 and 129 as the output polarization components 130 and 131, respectively. The optical frequency of the frequency components constituting the output polarization components depends on the resonant frequency of the Fabry-Perot cavity 12, which in turn depends on the refractive index of the controlled-index device 20. In an embodiment, the Fabry-Perot cavity operates to transmit only one of the frequency components of each of the input polarization components 128 and 129 as the output polarization components 130 and 131.

The polarization-dispersive device 126 spatially overlaps the polarization components 130 and 131 output by the Fabry-Perot cavity 12 to generate the output optical signal 132. The output optical signal is composed of one or more of the input frequency components of the optical input signal 118. In an embodiment, the output optical signal is composed of only one of the input frequency components of the optical input signal 118.

In applications in which an output optical signal composed of the two parallel polarization components 130 and 131 is acceptable, the polarization-dispersive device 126 may be omitted.

In the example shown in Figure 7, the polarization-dispersive devices 124 and 126 include the walk-off crystals 133 and 134, respectively. Suitable materials for the walk-off crystals include, but are not limited to, calcite (CaCO₃), rutile (principally titanium dioxide - TiO₂) and yttrium vanadate (YVO₄).

Figure 8 shows an alternative embodiment 110 of the tunable optical filter according to the invention. In the tunable optical filter 110, the polarization-dispersive device 124 is composed of the polarizing beam-splitter 135 and the plane mirror 136 in a periscope arrangement, and the polarization-dispersive device 126 is composed of the polarizing beam-splitter 137 and the plane mirror 138, also in a periscope arrangement. Elements of the tunable optical filter 110 that correspond to elements of the tunable optical filters 10 and 100 shown in Figures 1 and 7, respectively, are indicated using the same reference numerals and will not be described again here. Other optical arrangements for dividing an optical input signal into two linearly-polarized polarization components having orthogonal directions of polarization may are known in the art and may be used.

Figures 7 and 8 show the reflectors 14 and 16 as stand-alone elements. However, this is not critical to the invention. The reflectors 14 and 16 may be supported by the controlled-index device 20, or by the walk-off crystals 133 and 134. For example, the reflectors 14 and 16 may be deposited on the surfaces of the controlled-index device shown in Figure 7 as facing the reflectors 14 and 16, respectively. Alternatively, the reflectors 14 and 16 may be deposited on the surfaces of the walk-off crystals shown in Figure 7 as facing the reflectors 14 and 16, respectively.

Figures 7 and 8 show the polarization-dispersive devices 124 and 126 located outside the Fabry-Perot cavity 12 on opposite sides of the controlled-index device 20. However, this is not critical to the invention. The polarization-dispersive devices may be located inside the Fabry-Perot cavity on opposite sides of the controlled-index device.

Figure 7 additionally shows the walk-off crystals 133 and 134 as stand-alone elements. However, this is not critical to the invention. The walk-off crystals, the reflectors and the controlled-index devices, or subsets of them, may be joined to one another to form the tunable optical filter 100.

Figure 8 shows the polarization-dispersive devices 124 and 126 each composed of a stand-alone polarizing beam splitter and a stand-alone mirror. However, this is not critical to the invention. The components of the polarization-dispersive devices may be integrated with one another and may additionally be integrated with other components of the tunable optical filter 110.

Figure 8 shows the polarizing beam splitter 135 reflecting the polarization component 129 orthogonally to the polarization component 128. However, this is not critical to the invention. The polarization component may be reflected non-orthogonally. In this case, the mirror 136 is arranged to reflect the polarization component 128 in a direction parallel to the direction of propagation of the polarization component 128.

Many different ways of assembling the components described above as constituting the various embodiments of the tunable optical filter according to the invention are known in the art and will therefore not be described here.

Although this disclosure describes illustrative embodiments of the invention in detail, it is to be understood that the invention is not limited to the precise embodiments described, and that various modifications may be practiced within the scope of the invention defined by the appended claims.

## Claims

1. A tunable optical filter, comprising:
a Fabry-Perot cavity (12); and
a controlled-index device (20) located in the Fabry-Perot cavity, the controlled-index device having a refractive index responsive to a control signal (22).

2. The tunable optical filter of claim 1, in which the controlled-index device includes:
a pair of electrodes (43, 44); and
a liquid crystal material (42) sandwiched between the electrodes.

3. The tunable optical filter of claim 1, in which the controlled-index device includes:
a prism of an electro-optical material (52); and
at least one pair of electrodes (53, 54) electrically coupled to the prism of electro-optical material.

4. The tunable optical filter of claim 2 or 3, in which:
the Fabry-Perot cavity incudes a pair of reflectors disposed parallel to one another, the reflectors being partially reflective; and
the reflectors are integral with the electrodes.

5. The tunable optical filter of claim 1, in which the controlled-index device incudes:
a prism of a photorefractive material (82); and
a variable-intensity light source (83) optically coupled to the prism of photorefractive material.

6. The tunable optical filter of any one of claims 1, 2, 3 or 5, in which:
the Fabry-Perot cavity includes a pair of reflectors (14, 16) disposed parallel to one another, the reflectors, being partially reflective; and
the reflectors are supported by the controlled-index device.

7. The tunable optical filter of any one of the preceding claims, additionally comprising a polarization-dispersive device (124) located upstream of the controlled-index device.

8. The tunable optical filter of claim 7, in which:
the polarization-dispersive device located upstream of the controlled-index device is a first polarization-dispersive device; and
the tunable optical filter additionally comprises a second polarization-dispersive device (126) located downstream of the controlled-index device, the second polarization-dispersive device having a polarization dispersion complementary to that of the first polarization-dispersive device.

9. The tunable optical filter of claim 7 or 8, in which the polarization-dispersive device includes a walk-off crystal (133).

10. The tunable optical filter of claim 7 or 8, in which the polarization-dispersive device includes:
a polarizing beam splitter (135), the polarizing beam splitter generating two linearly-polarized polarization components having orthogonal directions of polarization and different directions of propagation; and
a mirror (136) arranged to reflect one of the polarization components (129) in a direction parallel to the direction of propagation of the other of the polarization components (128).

11. The tunable optical filter of any one of the preceding claims, additionally comprising a controller (49, 59, 79, 89) having an output coupled one of (a) electrically, and (b) optically, to the controlled-index device.
